# FASCICULE DE BREVET EUROPEEN

(11) **EP 0 797 946 B1**
(45) Date de publication et mention de la délivrance du brevet: **23.09.1998**
(21) Numéro de dépôt: 97420044.6
(22) Date de dépôt: 18.03.1997
(51) Int. Cl.: A47J 42/16

(54) **Moulin à café**
Kaffeemühle
Coffee mill

(30) Priorité: 19.03.1996 FR 9603643
(43) Date de publication de la demande: 01.10.1997
(73) Titulaire: Etablissements Santos, 69120 Vaulx-en-Velin (FR)
(72) Inventeur: Fouquet, Jacques, Via Romana, 69005 Lyon (FR)
(74) Mandataire: Myon, Gérard Jean-Pierre

(56) Documents cités:
- CH-A- 388 546
- CH-A- 406 545
- DE-A- 1 607 527
- DE-A- 3 429 044
- FR-A- 1 195 548
- FR-A- 2 263 734

## Description

L'invention a trait à un moulin à café tel que, notamment, utilisé dans les bars ou restaurants pour moudre un café en grains avant son utilisation dans une machine de type à expresso ou à filtre. Un tel moulin à café est décrit dans le document DE-A-1607527.

Il est connu que les moulins à café de l'art antérieur sont bruyants, ce qui s'avère généralement gênant car ils sont disposés à proximité de la machine dans laquelle doit être utilisé le café, c'est-à-dire dans la salle du bar ou du restaurant dans laquelle séjournent les clients. Ces moulins à café fonctionnent plusieurs fois par jour et en particulier au moment où le bar ou le restaurant produit un grand nombre de cafés pour ses consommateurs, c'est-à-dire à la fin des repas, le bruit ainsi émis venant s'ajouter au brouhaha résultant des conversations des clients et/ou du personnel.

La valeur moyenne du niveau de bruit mesurée en pression acoustique à environ 1 mètre de l'axe du moulin à café en fonctionnement est généralement supérieure à 70 dBA. Ce niveau de bruit est ressenti comme une gêne par la plupart des consommateurs d'un bar ou d'un restaurant.

Or, les origines du bruit émis par un moulin à café sont à la fois complexes et variées. Ce bruit résulte tout d'abord du bruit de l'outil, c'est-à-dire du bruit généré par les meules du moulin lorsqu'elles broient les grains de café. Ce bruit est réparti sur une large bande de fréquence, cette bande de fréquence étant déterminée essentiellement par la forme de la denture des meules utilisées.

Le bruit du moulin à café provient aussi des bruits magnétiques dûs au champ qui règne dans l'entrefer du moteur électrique d'entraînement des meules. Des ondes électromagnétiques de force sont générées par l'interférence des champs du stator et du rotor dûs à la présence des encoches, à la répartition des bobinages, ainsi qu'aux phénomènes de saturation et d'irrégularités d'entrefer. Ces bruits sont émis à une fréquence égale à la fondamentale du réseau électrique d'alimentation et à ses harmoniques, c'est-à-dire à des fréquences multiples de 50 Hertz.

Le bruit émis par un moulin à café résulte aussi de la résonnance des sous-ensembles mécaniques qui le constituent. Cette résonnance est due à certaines structures qui peuvent entrer en résonnance vibratoire sous l'effet de l'excitation résultant des vibrations dues aux bruits d'outils ou aux bruits magnétiques. Il arrive ainsi que certaines parties d'un moulin à café apparaissent comme de véritables hauts-parleurs pour les bruits générés par les parties tournantes, car elles amplifient ces bruits.

A moindre niveau, le bruit d'un moulin à café peut aussi provenir des bruits de déséquilibre et de roulement des parties tournantes, et/ou du bruit généré par le système de ventilation. Les bruits de déséquilibre et de roulement des parties tournantes peuvent être maîtrisés par une bonne rigueur de réalisation et les bruits dûs au système de ventilation sont généralement faibles par rapport aux autres bruits dans le cas d'un moulin à café.

En résumé, il est connu que le niveau sonore émis par un moulin à café a pour origine des phénomènes complexes et qu'il est difficile de faire la part entre le bruit émis par une source et les effets qu'elle-même engendre.

L'invention vise à proposer un moulin à café dont le niveau sonore en fonctionnement est acceptable et compatible avec son utilisation dans la salle d'un bar ou d'un restaurant.

Dans cet esprit, l'invention concerne un moulin à café comprenant deux meules animées d'un mouvement de rotation l'une par rapport à l'autre, dont l'une au moins est entraînée en rotation par un moteur électrique, dans lequel ledit moteur électrique est supporté par un châssis, un moyen d'absorption des vibrations étant disposé entre ledit moteur et ledit châssis, un capotage enveloppant lesdites meules et ledit moteur étant monté sur ledit châssis, caractérisé en ce que ledit châssis a une forme globale en U et comprend des faces verticales dont les parties supérieures portent ledit moyen d'absorption des vibrations.

Grâce à l'invention, les vibrations résultant du travail des meules et/ou du fonctionnement du moteur électrique qui sont au moins partiellement amorties par le moyen d'absorption situé entre le moteur et le châssis, sont ensuite abordées grâce à la géométrie du châssis. En effet, elles se propagent le long des faces ou ailes verticales du châssis en forme de U, de sorte qu'elles sont amorties par le matériau constitutif du châssis.

Comme le capotage est monté sur le châssis, il ne reçoit des vibrations du moteur et des meules qu'à travers le moyen d'absorption et le châssis en U, ces vibrations étant très fortement atténuées. Ainsi, le capotage ne risque pas d'entrer en résonnance sous l'effet de ces vibrations et constitue au contraire un écran acoustique, car il enveloppe les sources de bruit du moulin à café. On a pu noter expérimentalement que le niveau sonore moyen du moulin à café mesuré à 1 mètre de l'axe du moulin en fonctionnement a pu être ramené à 62 dBA, ce qui est un progrès sensible par rapport à l'art antérieur.

Selon un premier aspect avantageux de l'invention, le châssis est réalisé dans une structure multicouches. Cet aspect de l'invention permet d'absorber une partie des vibrations par cisaillement entre les couches formant le châssis. Une structure multicouches est également apte à constituer un filtre pour des ondes vibratoires sur une gamme de fréquences relativement large.

Selon un premier mode de réalisation de l'invention, on peut prévoir que le moyen d'absorption de vibrations est constitué par au moins un bloc en élastomère, ce matériau étant particulièrement efficace aux fréquences des vibrations engendrées par un moulin à café.

Selon un aspect avantageux de ce mode de réalisation, le moteur peut être supporté par au moins un pied dont l'extrémité pénètre à l'intérieur du bloc en élastomère alors que ce bloc en élastomère est inséré dans un orifice du châssis. Dans ce cas, le bloc en élastomère sert donc à la fois de dispositif de positionnement du moteur par rapport au châssis et de moyen d'absorption des vibrations.

Selon un autre mode de réalisation de l'invention, on peut prévoir que le moyen d'absorption des vibrations est constitué par au moins un ressort, la constante de raideur de ce ressort étant choisie en fonction des fréquences des bruits générés.

Selon un autre aspect avantageux de l'invention, le moulin à café comprend un joint disposé entre le bord d'une ouverture supérieure du capotage, une bague solidaire d'une des meules et la carcasse du moteur. Ce joint a une double fonction, il absorbe les vibrations émises par les meules et transitant à travers le carter et permet de garantir une bonne étanchéité de la liaison entre le capotage et le carter, ce qui permet de protéger le moteur électrique de la poussière, de l'humidité ou de la poudre de café moulu.

Dans le cas où le moulin comprend une trémie de stockage du café en grains, il est aussi possible de prévoir que la trémie est pourvue d'un canal de décharge apte à pénétrer dans un tube d'alimentation des meules, un joint étant monté sur la face externe de ce canal, de façon à pénétrer au moins partiellement dans ce tube. Ce joint a aussi une double fonction, il permet de garantir l'étanchéité du raccordement entre le canal de décharge et le tube d'alimentation et absorbe les vibrations qui parviennent jusqu'au tube d'alimentation. Ainsi, la trémie ne risque pas d'entrer en résonnance sous l'effet de ces vibrations.

Selon un autre aspect avantageux de l'invention, la trémie du moulin à café comprend une extension définissant une encoche de forme gauche alors que le capotage porte une nervure de forme gauche apte à pénétrer dans l'encoche. La coopération de cette nervure et de cette encoche permet donc de positionner fermement la trémie par rapport au capotage, de sorte que le joint monté sur la face externe du canal de décharge de la trémie n'a pas à supporter le poids total de celle-ci et du café en grains qu'elle contient, ce qui évite qu'il soit soumis à une contrainte mécanique importante et permanente. Ce joint conserve donc plus facilement son élasticité et les propriétés d'absorption mécaniques qui y sont liées.

Dans le cas où le moulin à café de l'invention comprend un réservoir apte à recevoir le café moulu, on peut aussi prévoir un joint monté entre ce réservoir et le capotage du moulin à café. Ce joint aide aussi à absorber les vibrations éventuelles du capotage, ce qui évite de faire entrer le réservoir en résonnance.

L'invention sera mieux comprise et d'autres avantages de celle-ci apparaîtront plus clairement à la lumière de la description qui va suivre d'un mode de réalisation d'un moulin à café conforme à son principe, donné uniquement à titre d'exemple et faite en référence aux dessins annexés dans lesquels :
la figure 1 est une vue en coupe longitudinale avec arrachement partiel d'un moulin à café conforme à l'invention et
la figure 2 est une vue en perspective éclatée des éléments constitutifs essentiels du moulin à café de la figure 1.

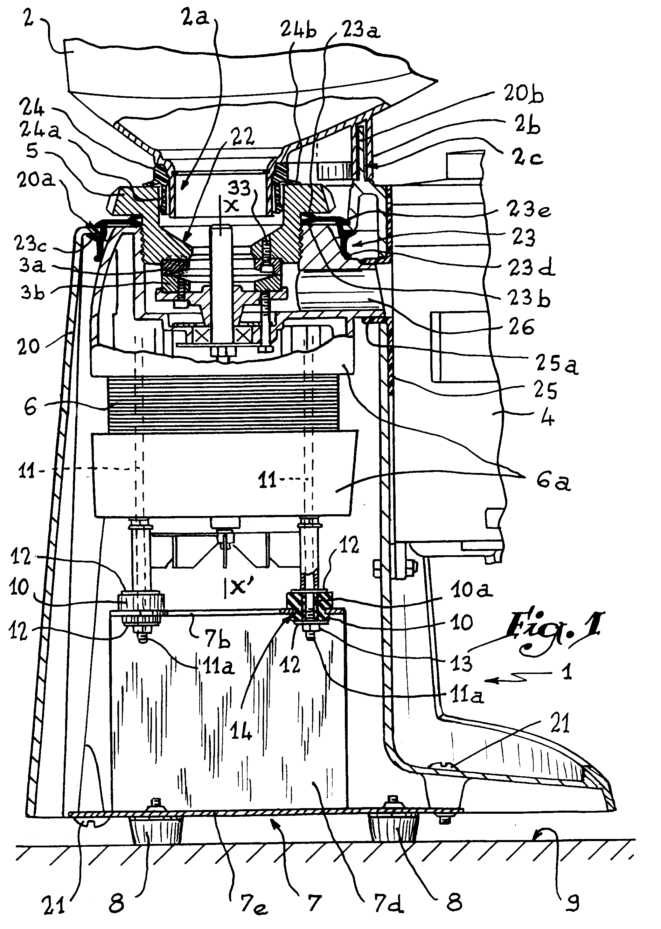

Le moulin à café 1 représenté à la figure 1 comprend une trémie 2 de stockage du café en grains et deux meules 3a et 3b destinées à moudre le café, celui-ci étant déversé dans un réservoir 4 de stockage du café moulu. La meule supérieure 3a est fixe, alors que la meule inférieure 3b est animée d'un mouvement de rotation par rapport à un axe vertical XX' par un moteur électrique 6.

La meule 3a est fixée par trois vis, dont l'une 33 est visible à la figure 1, sur une bague 5 qui est munie d'un filetage externe apte à coopérer avec un filetage interne de la carcasse 6a du moteur 6 pour régler la distance entre les meules 3a et 3b et, par voie de conséquence, la finesse du café moulu.

Les vibrations susceptibles de créer un bruit par propagation d'ondes dans l'air sont générées essentiellement par les meules 3a et 3b et par le moteur électrique 6.

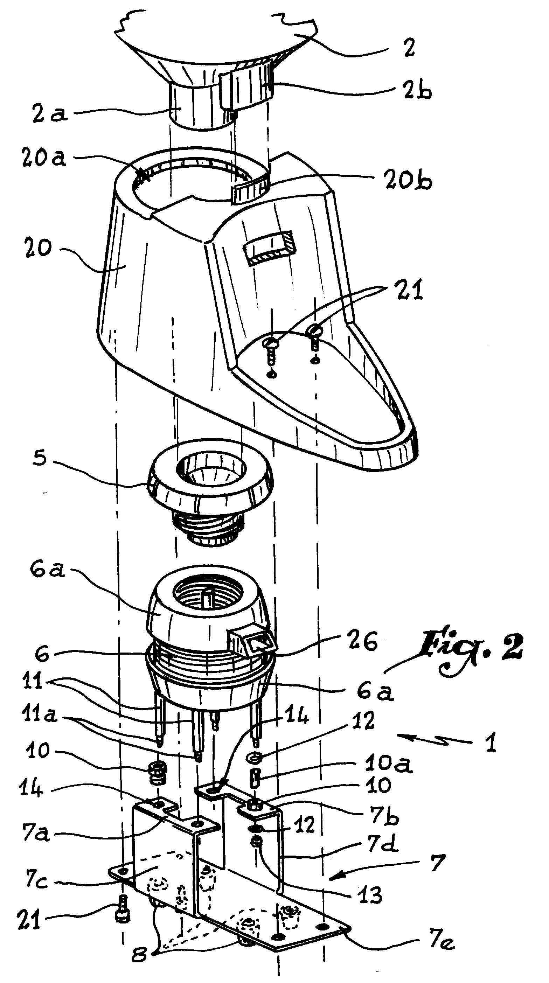

Le moteur 6 est supporté par un châssis 7 qui est en appui grâce à des pieds 8 en élastomère sur une surface 9 appartenant par exemple au comptoir d'un bar. Un moyen d'absorption des vibrations est constitué par des blocs en élastomère 10 disposés entre le moteur 6 et le châssis 7. Plus précisément, la carcasse 6a du moteur 6 est supportée par 4 tiges filetées 11 formant pied qui apparaissent plus clairement à la figure 2 et dont les extrémités 11a sont montées traversantes dans les blocs 10 en élastomère, chaque tige étant maintenue en position grâce à une entretoise 10a, à deux rondelles de butée 12 et à un écrou 13 serré sur son extrémité. La fonction de l'entretoise 10a est de limiter l'écrasement du bloc en élastomère 10 de façon à préserver ses caractéristiques de raideur, elles-même ajustées pour un amortisseur optimal.

Les blocs en élastomère 10 sont insérés dans quatre orifices 14 du châssis 7. Pour ce faire, la surface externe de chaque bloc 10 est pourvue d'une gorge annulaire périphérique apte à recevoir le bord de chaque orifice 14.

L'ensemble ainsi réalisé est apte à absorber les vibrations créées par les meules 3a et 3b et/ou par le moteur électrique 6. Ainsi, grâce aux blocs en élastomère 10, le châssis 7 est-il peu ou pas soumis à ces vibrations.

Un capotage 20, en aluminium ou matériau plastique tel que, par exemple, en polypropylène, enveloppant à la fois les meules et le moteur, est monté sur le châssis 7 au moyen de quatre vis 21. Grâce à ce montage, le capotage 20 n'étant pas directement en contact avec des éléments générateurs de vibration tels que les meules 3a, 3b ou le moteur 6, il peut donc servir d'écran acoustique par rapport à ces vibrations.

Conformément à l'invention, la forme et la structure du châssis 7 sont choisies de façon à faciliter ce découplage entre les meules 3a et 3b, le moteur 6 d'une part et le capotage d'autre part. Comme il apparaît plus clairement à la figure 2, le châssis 7 a une forme globale en U dont les parties supérieures 7a et 7b des faces verticales 7c et 7d sont pourvues des orifices 14 dans lesquels sont insérés les blocs en élastomère 10, de sorte que les parties supérieures 7a et 7b de ces branches latérales portent les moyens d'absorption des vibrations constitués par les blocs 10.

Grâce à cette construction, une vibration transmise par l'une des tiges filetées 11 au châssis 7 à travers un bloc en élastomère 10, parcourt chacune des faces verticales 7c et 7d du châssis 7, avant d'atteindre son voile inférieur 7e sur lequel est fixé le capotage 20 au moyen des vis 21. Compte tenu de la géométrie du châssis 7, ces vibrations peuvent être absorbées par des mouvements latéraux des faces verticales 7c et 7d.

En outre, on peut choisir le matériau du châssis 7 de façon à ce qu'il facilite cet amortissement, par exemple en réalisant ce châssis dans une structure multicouche et notamment dans un panneau formé de deux feuilles métalliques collées sur une bande en matière plastique. Dans ce cas, une onde vibratoire transitant dans l'une des faces verticales 7c ou 7d a pour conséquence la création d'un effort de cisaillement entre les feuilles métalliques et la bande en matière plastique. Cet effort de cisaillement est absorbé par la structure multicouche, ce qui participe aussi au découplage envisagé.

A sa partie supérieure, le capotage 20 est pourvu d'une ouverture 20a à travers laquelle peut être réalisé le raccordement entre un canal de décharge 2a de la trémie 2 et un tube 22 d'alimentation des meules 3a et 3b formé dans la bague 5. L'ouverture 20a a des dimensions lui permettant d'entourer la carcasse 6a à une faible distance.

Conformément à un aspect avantageux de l'invention et comme cela apparaît sur la figure 1 uniquement, un joint 23 est disposé entre le bord de l'ouverture 20a et la bague 5 et la carcasse 6a. Ce joint 23 est pourvu de lèvres 23a à 23e destinées à reposer respectivement contre la bague 5, la carcasse 6a ou le capotage 20, de sorte qu'elles ont une double fonction. D'une part elles peuvent recevoir et absorber des vibrations transmises à la bague 5 par la meule 3a et les amortir à cause du matériau utilisé pour la construction de ce joint, le matériau étant par exemple un élastomère, du polychlorure de vinyl (PVC), du polyuréthane ou un mélange d'éthylène et de propylène généralement désigné par le nom abrégé EPDM ou EPT selon sa nuance. En effet, le joint 23 n'a pas de fonction mécanique de supportage d'une des pièces 5 ou 20, de sorte que son épaisseur peut être faible, ce qui permet de conférer aux lèvres 23a à 23e une faible épaisseur leur permettant d'épouser la forme des pièces avec lesquelles elles sont en contact et de bouger selon des mouvements d'oscillation rapides avec une transmission de vibrations minimale aux autres parties du joint 23. D'autre part, les lèvres 23a à 23e ont une fonction d'étanchéité puisqu'elles permettent de rendre étanches à l'eau et aux particules fines telles que le café moulu, la liaison entre le capotage 20 et le carter 5.

Un autre joint 24 est monté sur la face externe du canal 2a de façon à pénétrer au moins partiellement dans le tube d'alimentation 22. La partie inférieure du joint 24 est munie d'un bourrelet 24a dont les dimensions nominales sont légèrement supérieures au diamètre intérieur du tube 22, de sorte que la mise en place du canal 2a à l'intérieur du tube 22 résulte dans une compression du bourrelet 24a. Cette compression du bourrelet 24a se traduit par un effort de coincement du canal 2a à l'intérieur du tube 22. Par ailleurs, le joint 24 est muni d'une lèvre périphérique 24b qui est destinée à reposer sur la partie supérieure de la bague 5, lorsque le canal 2a est en position dans le tube 22. Cette lèvre 24b a essentiellement une fonction d'étanchéité.

La trémie 2 est supportée dans sa position d'engagement avec le moulin de l'invention, grâce à une extension 2b venue de matière avec la trémie 2 et définissant une encoche de forme gauche, c'est-à-dire s'étendant dans trois dimensions orthogonales, alors que le capotage 20 porte une nervure 20b, gauche elle aussi, apte à pénétrer dans l'encoche 2c de l'extension 2b.

La mise en place de la trémie 2 sur le capotage 20 a lieu en coiffant la nervure 20b avec l'extension 2b. Compte tenu de la forme gauche de l'encoche 2c et de la nervure 2b, la mise en place de l'extension 2b sur la nervure 20b implique une position unique de la trémie 2 par rapport au capotage 20. Cette position est définie de façon à ce que le canal 2a soit engagé dans le tube 22, alors que le joint 24 est comprimé au niveau du bourrelet 24a et que la lèvre 24b est en appui sur la face supérieure du tube 22. Le joint 24 n'a pas à supporter en permanence le poids de la trémie et du café qu'elle contient, ce qui évite qu'il soit soumis à une contrainte mécanique importante et lui permet de conserver ses propriétés mécaniques d'absorption des vibrations et d'étanchéité au cours du temps. La coopération de l'encoche 2c et de la nervure 20b permet le supportage de la trémie 2 en position par rapport au reste du moulin.

Le réservoir 4 est monté par tout moyen adapté et par exemple par des vis sur le capotage 20. Pour éviter la transmission de vibrations éventuelles au réservoir 4, un joint 25 est monté entre le capotage 20 et le réservoir 4 autour de l'orifice d'entrée du réservoir 4. Le joint 25 est muni d'une lèvre annulaire 25a apte à entourer la sortie 26 du café moulu ménagé dans le carter 5. La lèvre 25a a une fonction d'étanchéité et coopère avec le reste du joint 25 pour absorber des vibrations.

Le moulin à café tel que décrit est silencieux et apte à fonctionner dans un cadre où les sources de bruit doivent être discrètes tel que, par exemple, la salle d'un bar ou d'un restaurant.

## Revendications

1. Moulin à café (1) comprenant deux meules (3a, 3b) animées d'un mouvement de rotation l'une par rapport à l'autre, dont l'une (3b) au moins est entraînée en rotation par un moteur électrique (6), dans lequel ledit moteur électrique est supporté par un châssis (7), un moyen (10) d'absorption des vibrations étant disposé entre ledit moteur et ledit châssis, un capotage (20) enveloppant lesdites meules et ledit moteur étant monté sur ledit châssis, caractérisé en ce que ledit châssis (7) a une forme globale en U et comprend des faces verticales (7c, 7d) dont les parties supérieures (7a, 7b) portent ledit moyen d'absorption des vibrations (10).

2. Moulin à café selon la revendication 1, caractérisé en ce que ledit châssis (7) est réalisé dans une structure multicouche.

3. Moulin à café selon l'une des revendications 1 ou 2, caractérisé en ce que ledit moyen d'absorption de vibrations est constitué par au moins un bloc en élastomère (10).

4. Moulin à café selon la revendication 3, caractérisé en ce que ledit moteur (6) est supporté par au moins un pied (11) dont l'extrémité (11a) pénètre à l'intérieur dudit bloc en élastomère (10), ledit bloc élastomère étant inséré dans un orifice (14) dudit châssis (7).

5. Moulin à café selon l'une des revendications 1 ou 2, caractérisé en ce que ledit moyen d'absorption de vibrations est constitué par au moins un ressort.

6. Moulin à café selon l'une des revendications précédentes, caractérisé en ce qu'il comprend un joint (23) disposé entre le bord d'une ouverture supérieure (20a) dudit capotage (20), une bague (5) solidaire d'une (3a) desdites meules et la carcasse (6a) dudit moteur (6).

7. Moulin à café selon l'une des revendications précédentes, caractérisé en ce qu'il comprend une trémie (2) de stockage du café en grains pourvue d'un canal (2a) de décharge apte à pénétrer dans un tube (22) d'alimentation desdites meules (3a, 3b), un joint (24) étant monté sur la face externe dudit canal de façon à pénétrer au moins partiellement dans ledit tube d'alimentation.

8. Moulin à café selon l'une des revendications précédentes, caractérisé en ce qu'il comprend un réservoir (4) apte à recevoir le café moulu par lesdites meules, un joint (25) étant monté entre ledit réservoir et ledit capotage (20).

9. Moulin à café selon l'une des revendications 6 à 8, caractérisé en ce que ledit joint est pourvu de lèvres (23a-23e, 24b, 25a).

10. Moulin à café selon l'une des revendications précédentes, caractérisé en ce qu'il comprend une trémie (2) de stockage du café en grains comprenant une extension (2b) définissant une encoche (2c) de forme gauche alors que ledit capotage (20) porte une nervure (20b) de forme gauche apte à pénétrer dans ladite encoche.

## Claims

1. Coffee mill (1) comprising two grinding wheels (3a, 3b) rotated one with respect to the other, at least one (3b) of which is rotated by an electric motor (6), in which mill the said electric motor is supported by a chassis (7), a means (10) of absorbing vibration being fitted between the said motor and the said chassis, a cover (20) enveloping the said grinding wheels and the said motor being mounted on the said chassis, characterized in that the said chassis (7) has the overall shape of a U and comprises vertical faces (7c, 7d) the upper parts (7a, 7b) of which bear the said vibration-absorbing means (10).

2. Coffee mill according to Claim 1, characterized in that the said chassis (7) is made of a multilayer structure.

3. Coffee mill according to either of Claims 1 and 2, characterized in that the said vibration-absorbing means consists of at least one block of elastomer (10).

4. Coffee mill according to Claim 3, characterized in that the said motor (6) is supported by at least one leg (11), the end (11a) of which penetrates the said block of elastomer (10), the said elastomer block being inserted in an orifice (14) of the said chassis (7).

5. Coffee mill according to either of Claims 1 and 2, characterized in that the said vibration-absorbing means consists of at least one spring.

6. Coffee mill according to one of the preceding claims, characterized in that it comprises a seal (23) placed between the edge of an upper opening (20a) of the said cover (20), a ring (5) secured to one (3a) of the said grinding wheels and the frame (6a) of the said motor (6).

7. Coffee mill according to one of the preceding claims, characterized in that it comprises a hopper (2) for storing coffee beans, equipped with a discharge duct (2a) capable of penetrating a tube (22) that feeds the said grinding wheels (3a, 3b), a seal (24) being mounted on the outer face of the said duct so that it at least partially penetrates the said feed tube.

8. Coffee mill according to one of the preceding claims, characterized in that it comprises a container (4) capable of receiving the coffee ground by the said grinding wheels, a seal (25) being fitted between the said container and the said cover (20).

9. Coffee mill according to one of Claims 6 to 8, characterized in that the said seal has lips (23a-23e, 24b, 25a).

10. Coffee mill according to one of the preceding claims, characterized in that it comprises a hopper (2) for storing coffee beans, comprising an extension (2b) defining a cut-out (2c) of non-linear shape while the said cover (20) bears a rib (20b) of non-linear shape designed to penetrate the said cut-out.

## Patentansprüche

1. Kaffeemühle (1) mit folgenden Merkmalen:
zwei zusammenwirkende Mahlkörper (3a, 3b), die durch eine Drehbewegung zueinander angetrieben werden und von denen wenigstens einer (3b) durch einen Elektromotor drehend angetrieben wird, wobei der Elektromotor von einem Tragrahmen (7) gehalten wird;
eine Schwingungsdämpfungseinrichtung (10) ist zwischen dem Motor und dem Tragrahmen angeordnet;
ein Gehäuse (20) umgibt die Mahlkörper und den Motor, der an dem Tragrahmen (7) angebracht ist;
dadurch gekennzeichnet, daß
der Tragrahmen (7) im wesentlichen U-förmig ist und vertikale Flächen (7c, 7d) umfaßt, deren obere Abschnitte (7a, 7b) die Schwingungsdämpfungseinrichtungen (10) tragen.

2. Kaffeemühle nach Anspruch 1,
dadurch gekennzeichnet, daß der Tragrahmen (7) in Mehrlagenschicht-Bauweise hergestellt ist.

3. Kaffeemühle nach Anspruch 1 oder 2,
dadurch gekennzeichnet, daß die Schwingungsdämpfungseinrichtung wenigstens einen Elastomerblock (10) umfaßt.

4. Kaffeemühle nach Anspruch 3,
dadurch gekennzeichnet, daß der Motor (6) von wenigstens einem Fuß (11) getragen wird, dessen Ende (11a) sich durch den Elastomerblock (10) hindurch erstreckt, und daß der Elastomerblock in eine Öffnung (14) des Tragrahmens (7) eingesetzt ist.

5. Kaffeemühle nach Anspruch 1 oder 2,
dadurch gekennzeichnet, daß die Schwingungsdämpfungseinrichtung wenigstens eine Feder umfaßt.

6. Kaffeemühle nach einem der vorherstehenden Ansprüche,
dadurch gekennzeichnet, daß diese eine Dichtung (23) umfaßt, die zwischen dem oberen Öffnungsrand (20a) des Gehäuses (20), einem Ring (5), der mit einem der Mahlkörper (3a) fest verbunden ist, und dem Gehäuse (6a) des Motors (6) angeordnet ist.

7. Kaffeemühle nach einem der vorherstehenden Ansprüche,
dadurch gekennzeichnet, daß diese einen Schütt-Trichter (2) für eine Ladung Kaffeebohnen mit einem Auslaßkanal-Rohrstutzen (2a) umfaßt, der in ein Beschickungsrohr (22) der Mahlkörper (3a, 3b) einsetzbar ist, wobei eine Dichtung (24) auf der äußeren Oberfläche des Auslaßkanal-Rohrstutzens angebracht ist, die wenigstens teilweise in das Beschickungsrohr hineinragt.

8. Kaffeemühle nach einem der vorherstehenden Ansprüche,
dadurch gekennzeichnet, daß diese einen Behälter umfaßt, der den durch die Mahlkörper gemahlenen Kaffee aufnehmen kann, wobei eine Dichtung (25) zwischen dem Behälter und dem Gehäuse (20) angeordnet ist.

9. Kaffeemühle nach einem der Ansprüche 6 bis 8,
dadurch gekennzeichnet, daß die Dichtung mit Lippen (23a bis 23e, 24b, 25a) versehen ist.

10. Kaffeemühle nach einem der vorherstehenden Ansprüche,
dadurch gekennzeichnet, daß diese einen Schütt-Trichter (2) für eine Ladung Kaffeebohnen umfaßt, der einen Fortsatz (2b) aufweist, der eine außermittige Aussparung (2c) bildet, während das Gehäuse (20) eine außermittige Rippe (20b) trägt, die in die Aussparung hineinpaßt.
